# EUROPEAN PATENT APPLICATION

(11) **EP 4 727 197 A1**
(43) Date of publication of application: **15.04.2026**
(21) Application number: 24823245.6
(22) Date of filing: 31.05.2024
(51) Int. Cl.: H04W 24/02, H04W 16/26, H04W 84/00, H04W 88/08, H04W 92/20

(54) **COMMUNICATION DEVICE, CONTROL METHOD, AND PROGRAM**

(30) Priority: 12.06.2023 JP 2023096499
(71) Applicant: Canon Kabushiki Kaisha, Tokyo, 146-8501 (JP)
(72) Inventor: ONDA Taiga, Tokyo 146-8501 (JP)
(74) Representative: Canon Europe Limited
(86) International application number: PCT/JP2024/019968
(87) International publication number: WO 2024/257625

(57) **Abstract**

Disclosed is a communication apparatus characterized by including determination means for determining whether or not its own node functioning as an IAB (Integrated Access and Backhaul) node which forms one IAB network is capable of operating as a boundary IAB node which serves as an IAB node connecting to both the one IAB network and another IAB network, and transmission means for transmitting, based on a determination result of the determination means, a communication message according to the determination result.

## Description

### Technical Field

The present disclosure relates to a communication apparatus, a control method, and a program.

### Background Art

In 3GPP (3rd Generation Partnership Project) (registered trademark), standardization of IAB (Integrated Access and Backhaul) is progressing as a communication technique for backhaul.

The IAB technique is a technique with which millimeter-wave wireless communication such as a 28 GHz band which is used for access communication between a base station and a user equipment (UE) is used at the same time as backhaul communication (PTL 1).

In the backhaul communication using the IAB technique, a relay equipment called an IAB node relays communication from an IAB donor serving as a base station by millimeter-wave communication.

By using the IAB technique, it is possible to expand an area coverage at a lower cost as compared with wired communication based on an optical fiber or the like in related art.

Up to now, in 3GPP, specification establishment with regard to a boundary IAB node has been implemented up until Rel-17.

As disclosed in PTL 2, the boundary IAB node is content discussed from Rel-17 and is an IAB node that connects to both respective IAB networks managed by different IAB donors. Control on the boundary IAB node is executed by a single IAB donor. For this reason, an IAB node that connects to a subordinate of the boundary IAB node connects to the IAB network managed by the IAB donor that controls the boundary IAB node.

An advantage of the boundary IAB node is an aspect that the IAB donor that controls the boundary IAB node can perform communication via an IAB network managed by another IAB donor when communication with an apparatus that connects to the boundary IAB node is performed. According to this, the IAB donor that controls the boundary IAB node can reduce inconvenience in a case where a wireless link failure has occurred in the network managed by itself. That is, by using another IAB network, it becomes possible to perform communication by avoiding the wireless link failure.

### Citation List

### Patent Literature

PTL 1: PCT Japanese Translation Patent Publication No. 2019-534625
PTL 2: U.S. Patent Application Publication No. 2022/0394571

### Summary of Invention

### Technical Problem

As 5G (5th Generation Mobile Communication System) becomes widespread in the future, it is expected that IAB nodes and mobile IAB nodes, in particular, are generally and widely used. In this case, there is a possibility that not all the IAB nodes are capable of functioning as the boundary IAB nodes due to an equipment specification, a resource limitation, and the like.

The present invention has been made in view of at least one of the above-described issues. According to one aspect of the present invention, it is aimed to provide a scheme in which an IAB node capable of operating as a boundary IAB node can be grasped.

### Solution to Problem

A communication apparatus according to one aspect of the present invention is characterized by including
determination means for determining whether or not its own node functioning as an IAB node which forms one IAB network is capable of operating as a boundary IAB node which serves as an IAB node connecting to both the one IAB network and another IAB network, and
transmission means for transmitting, based on the determination result, a communication message according to the determination result.

### Advantageous Effects of Invention

According to one aspect of the present invention, it becomes possible to provide the scheme in which the IAB node capable of operating as the boundary IAB node can be grasped.

### Brief Description of Drawings

[Fig. 1] Fig. 1 is a hardware block diagram in which an IAB node and an IAB donor are configured.
[Fig. 2] Fig. 2 is a software functional block diagram of the IAB node and the IAB donor.
[Fig. 3] Fig. 3 is a configuration example of a backhaul communication system (network based on backhaul communication) in a first embodiment.
[Fig. 4A] Fig. 4A is a boundary IAB node processing sequence example according to the IAB node in 3GPP standards.
[Fig. 4B] Fig. 4B is a schematic flowchart illustrating an example of RRC message generation processing of the IAB node in the first embodiment.
[Fig. 5] Fig. 5 is a boundary IAB node processing necessity determination sequence example of the IAB donor in the first embodiment.
[Fig. 6] Fig. 6 is a network participation processing sequence example of the IAB node in the 3GPP standards.
[Fig. 7] Fig. 7 is the boundary IAB node processing necessity determination sequence example of the IAB donor in a second embodiment.

### Description of Embodiments

Hereinafter, each of embodiments will be described in detail with reference to the accompanying drawings.

Each embodiment described below is mainly described with respect to its application example in 5G, but each embodiment is not limited to 5G and can also be applied to LTE (Long Term Evolution) and 4G and other next generation networks in 6G and beyond.

### [First Embodiment]

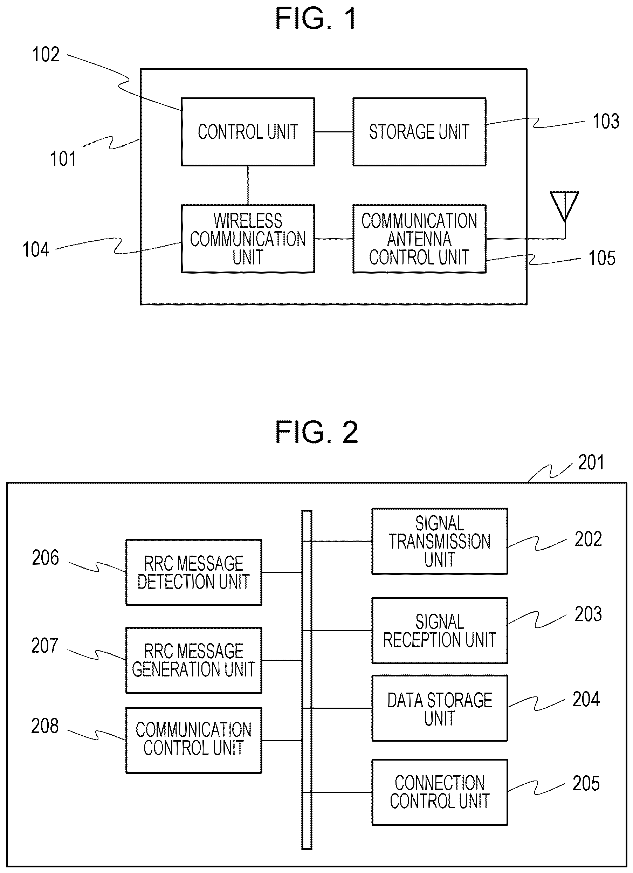

Fig. 1 is a block diagram representing an example of a hardware configuration of an IAB node according to a first embodiment. It is noted that the same may also be applied to a hardware configuration of an IAB donor.

A hardware configuration 101 of the IAB node includes a control unit 102, a storage unit 103, a wireless communication unit 104, and a communication antenna control unit 105.

The control unit 102 is configured, for example, by one or more processors such as CPUs and MPUs and controls an entirety of a communication apparatus by executing a control program read to a RAM serving as the storage unit 103. It is noted that each processing performed by the control unit 102 which will be described in a flowchart below can also be realized by using a hardware circuit such as an ASIC or an FPGA. It is noted that ASIC is an abbreviation of Application Specific Integrated Circuit. FPGA is an abbreviation of Field Programmable Gate Array. In addition, the processing described in the flowchart which will be described below can be realized by causing the hardware circuit and the processors such as the CPUs and the MPUs to cooperate.

The storage unit 103 saves information used by the control unit 102 for control and information related to communication. For example, the storage unit 103 stores the control program executed by the control unit 102 and various information such as cell information, connection terminal information, IAB routing information, and position information.

The storage unit 103 may include a main memory unit and an auxiliary memory unit. The main memory unit is, for example, a ROM (Read Only Memory), a RAM (Random Access Memory), or the like. The main memory unit may store or temporarily save an OS (Operating System) that is basic software executed by the control unit 102, a program such as application software, and data. The auxiliary memory unit is, for example, an HDD (Hard Disk Drive), an SSD (Solid State Drive), or the like and may store data related to the application software and the like. For example, a control program stored in a non-volatile storage area is deployed in the RAM (Random Access Memory) and executed by the processor which configures the control unit 102. In this manner, the control unit 102 and the storage unit 103 may function as a so-called computer.

The storage unit 103 may include a recording medium which stores a predetermined program. A program stored in this recording medium is installed via a drive apparatus or the like, and a predetermined program that has been installed may be executable by the control unit 102. Various types of recording media can be used as the recording medium. For example, the recording medium may be a recording medium configured to optically, electrically, or magnetically record information, such as a CD (Compact Disc)-ROM, a flexible disc, or an opto-magnetic disc. In addition, the recording medium may be a semiconductor memory or the like configured to electrically record information such as a ROM or a flash memory. It is noted that the recording medium does not include a carrier wave.

The wireless communication unit 104 performs cellular network communication such as LTE and 5G that comply with 3GPP standards.

The communication antenna control unit 105 controls an antenna used for wireless communication executed in the wireless communication unit 104.

Fig. 2 is a block diagram representing an example of a configuration of a software function block of the IAB node which executes a communication control function. It is noted that the same may also apply to a software configuration of the IAB donor.

A software configuration 201 of the IAB node is stored in the storage unit 103 and executed in the control unit 102.

The software configuration 201 is provided with a signal transmission unit 202, a signal reception unit 203, a data storage unit 204, a connection control unit 205, an RRC message detection unit 206, an RRC message generation unit 207, and a communication control unit 208.

The signal transmission unit 202 and the signal reception unit 203 implement cellular network communication such as LTE and 5G that comply with 3GPP standards with a terminal apparatus such as a UE.

The data storage unit 204 stores and holds software itself and IAB routing information, information related to a currently connected terminal, position information, movement route information, and the like.

The connection control unit 205 controls an antenna for wireless communication performed in the wireless communication unit 104.

The RRC message detection unit 206 detects an RRC message from an IAB node located in a periphery (hereinafter, which will be also referred to as a "peripheral IAB node"), a UE, or an IAB donor. RRC is an abbreviation of Radio Resource Control.

The RRC message generation unit 207 generates an RRC message to be transmitted to the peripheral IAB node, the UE, or the IAB donor.

The communication control unit 208 performs connection to a network such as LTE or 5G and disconnection.

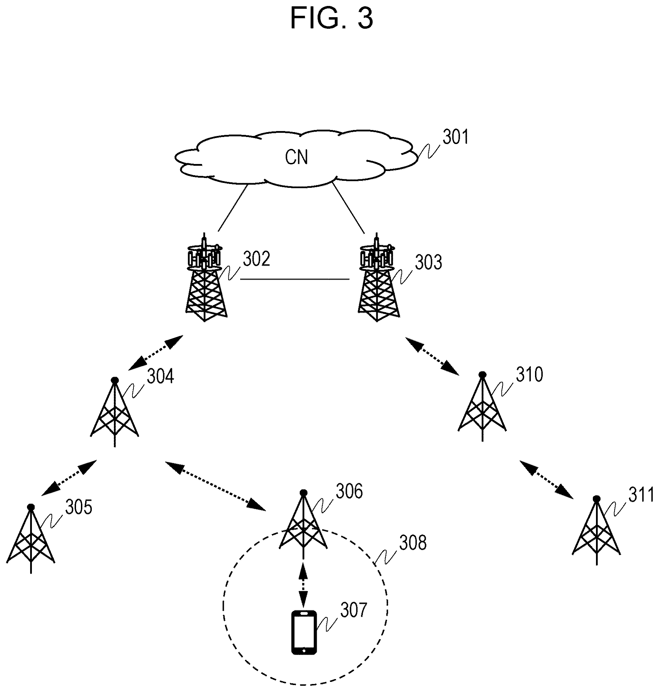

Fig. 3 illustrates a configuration example of a backhaul communication system (network based on backhaul communication) in the present embodiment.

It is noted that in the backhaul communication, communication from an IAB donor serving as a relay source is sequentially relayed from a parent node to a child node. For example, the IAB donor provides the backhaul communication to an IAB node that connects to its own station, and a relationship is established in which the IAB donor serves as the parent node and the IAB node connecting to the IAB donor serves as the child node herein.

In the example illustrated in Fig. 3, in the communication system, an IAB donor 302 and an IAB donor 303 exist as IAB donors connecting to a CN (core network) 301. The IAB donor 302 and the IAB donor 303 provide an IAB node connecting to itself as the child node with connection to the CN 301 via the backhaul communication (that is, providing the backhaul communication).

The CN and the IAB donor are connected in a wired manner and generally connected by an IP (Internet Protocol) network. In addition, an interface between IAB donors is an Xn interface defined in 3GPP TS38.420.

An IAB node 304 connects to the IAB donor 302 as a child node. An IAB node 305 and an IAB node 306 further connect to the IAB node 304 as child nodes.

The UE 307 that communicates in a cell area 308 of a cell to which the IAB node 306 provides a service can connect to the CN 301 via each IAB donor or an IAB node. In the communication system illustrated in Fig. 3, the UE 307 connects to the CN 301 via the IAB node 306.

In addition, the IAB donor or the IAB node other than the IAB node 306 can similarly provide the UE with connection to the CN 301 in the cell area.

On the other hand, an IAB node 310 connects to the IAB donor 303 as the child node. An IAB node 311 is further connected to the IAB node 310 as the child node. In this manner, each of the IAB donor 302 and the IAB donor 303 constitutes its own IAB network.

It is noted that an arrangement/configuration of each communication apparatus in the communication system illustrated in Fig. 3 is an example, and the following description can be applied to other arrangement/configuration.

In addition, each communication apparatus in the communication system illustrated in Fig. 3 is a communication apparatus in a 5G access network which is also referred to as an NR (New Radio) access network. In addition, a wireless base station apparatus (an IAB donor and an IAB node) is also referred to as a gNB. It is noted that the following description can also be applied to configurations based on other next generation networks.

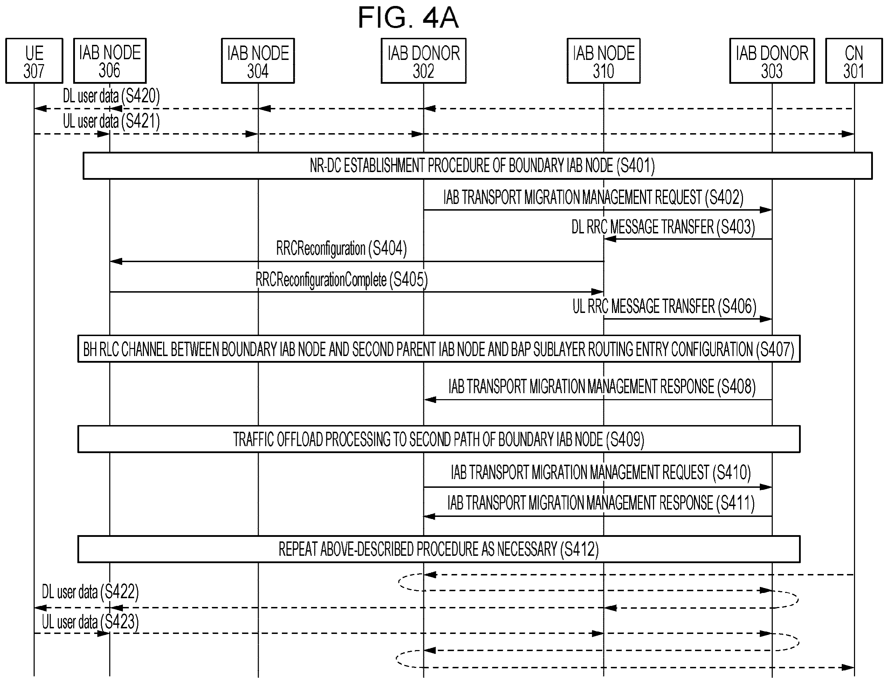

Fig. 4A illustrates a general sequence when an IAB node based on 3GPP standards operates as a boundary IAB node. This sequence is defined in 3GPP TS38.401.

In this sequence diagram, a case will be exemplified where the IAB node 306 operates as the boundary IAB node, and the IAB node 310 and the IAB donor 303 are selected as second connection destinations.

The IAB node 306 currently connects to the CN 301 via the IAB node 304 and the IAB donor 302.

The UE 307 connects to the IAB node 306. In this case, the UE 307 transmits and receives downlink data S420 and uplink data S421 for the CN 301 via the IAB node 306, the IAB node 304, and the IAB donor 302.

First, NR-DC connection establishment processing of the boundary IAB node illustrated in S401 is implemented between the IAB node 306 and the CN 301. It is noted that "DC" in NR-DC is an abbreviation of Dual Connectivity. The IAB node 306 collects information of a peripheral IAB node and a base station and transmits a currently connected upper node as MeasurementReport. The IAB donor 302 serving as the upper node that has received the MeasurementReport selects, based on MeasurementReport or the like, a second connection destination to which the IAB node 306 newly establishes connection. Then, the IAB donor 302 and each of other apparatuses cooperate, so that the NR-DC connection establishment processing of adding the second connection destination selected by the IAB donor 302 as a secondary node is executed.

This processing sequence is defined in 3GPP TS37.340 and is implemented for an MT (Mobile Termination) unit of the boundary IAB node 306.

Subsequently, in S402, the IAB donor 302 transmits an IAB TRANSPORT MIGRATION MANAGEMENT REQUEST message to the IAB donor 303 serving as the second connection destination.

In S403, the IAB donor 303 that has received this request transmits a DL RRC MESSAGE TRANSFER message equivalent to an RRCReconfiguration message to the IAB node 310.

Subsequently, in S404, the IAB node 310 transmits the RRCReconfiguration message to the boundary IAB node 306 serving as the connection destination.

In S405, the boundary IAB node 306 transmits an RRCReconfigurationComplete message to the IAB node 310 as a response to the above-described message. The IAB node 310 having received this transmits a UL RRC MESSAGE TRANSFER message equivalent to the RRCReconfigurationComplete message to the IAB donor 303 (S406).

By the processing performed so far, the boundary IAB node 306 is ready to connect to the IAB node 310 and the IAB donor 303 serving as a second communication route. Then, in S407, wireless layer and backhaul connection processing between the boundary IAB node 306 and the IAB node 310 and the IAB donor 303 serving as the second connection destinations is implemented.

After completion of the above-described processing, in S408, IAB TRANSPORT MIGRATION MANAGEMENT RESPONSE is transmitted from the IAB donor 303 to the IAB donor 302 as a response to S402.

Subsequently, in S409, offload processing of uplink and downlink data is implemented.

After completion of the above-described processing, the IAB donor 302 transmits an IAB TRANSPORT MIGRATION MANAGEMENT REQUEST message to the IAB donor 303 serving as an offload destination (S410). Transmission of this message corresponds to transmission of completion of the offload processing. As a response thereto, the IAB donor 303 transmits an IAB TRANSPORT MIGRATION MANAGEMENT RESPONSE message to the IAB donor 302 (S411).

Through the series of processes thus far, as illustrated in S422 and S423, the IAB node 306 performs an operation as the boundary IAB node, and it becomes possible to enable transmission and reception of the uplink and downlink data in the second communication route via the IAB node 310.

In addition, these processes may be repeated in S412 when necessary. In this case, since the NR-DC connection is already established in S401, the processes from S402 to S411 are implemented.

Incidentally, the processing illustrated in Fig. 4A is a process when the IAB node 306 serves as a mobile IAB node and operates as a boundary IAB node. Since the mobile IAB node which is moving serves as the boundary IAB node, connection switch at the time of moving can be seamlessly implemented.

However, as 5G becomes widespread in the future, it is expected that the IAB nodes and the mobile IAB nodes, in particular, are generally and widely used. In this case, it is unlikely that all the IAB nodes may serve as the boundary IAB nodes due to an equipment specification, a resource limitation, and the like.

In addition, when all the nodes operate as the boundary IAB nodes, processing between the IAB donor and a CU (Central Unit) also increases, and there is also a risk that a system load may increase.

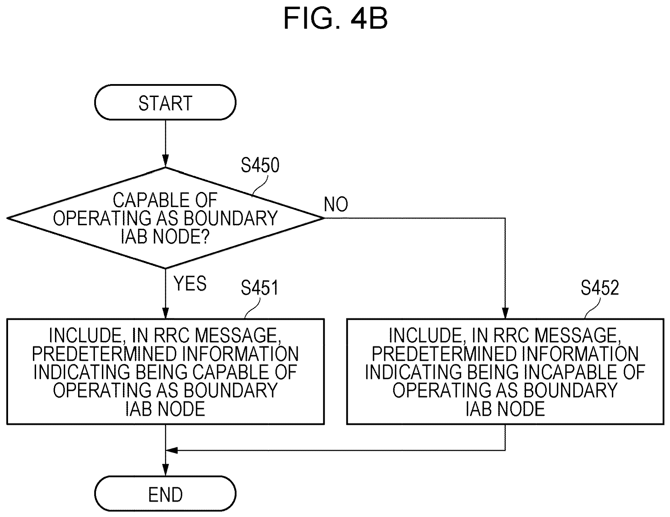

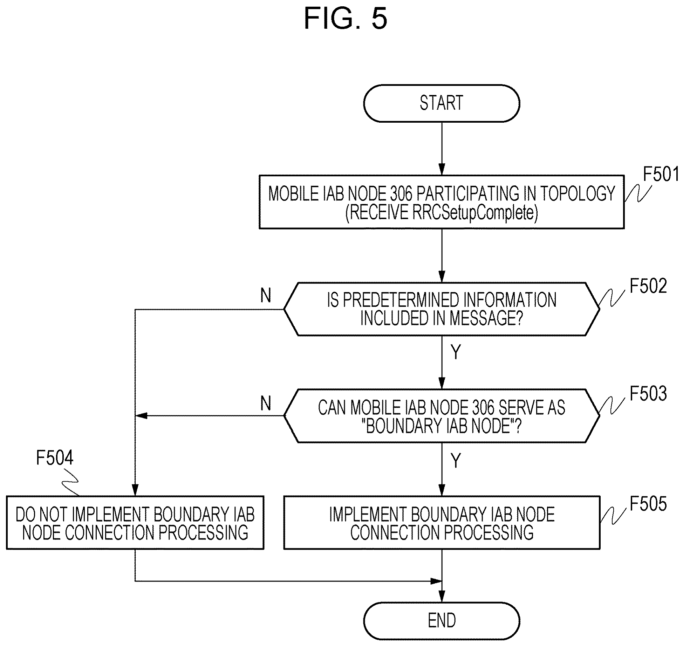

In view of the above, a scheme will be described with reference to Fig. 4B and Fig. 5 below in which the IAB node that does not operate as the boundary IAB node can be explicitly distinguished on the IAB donor 302 side.

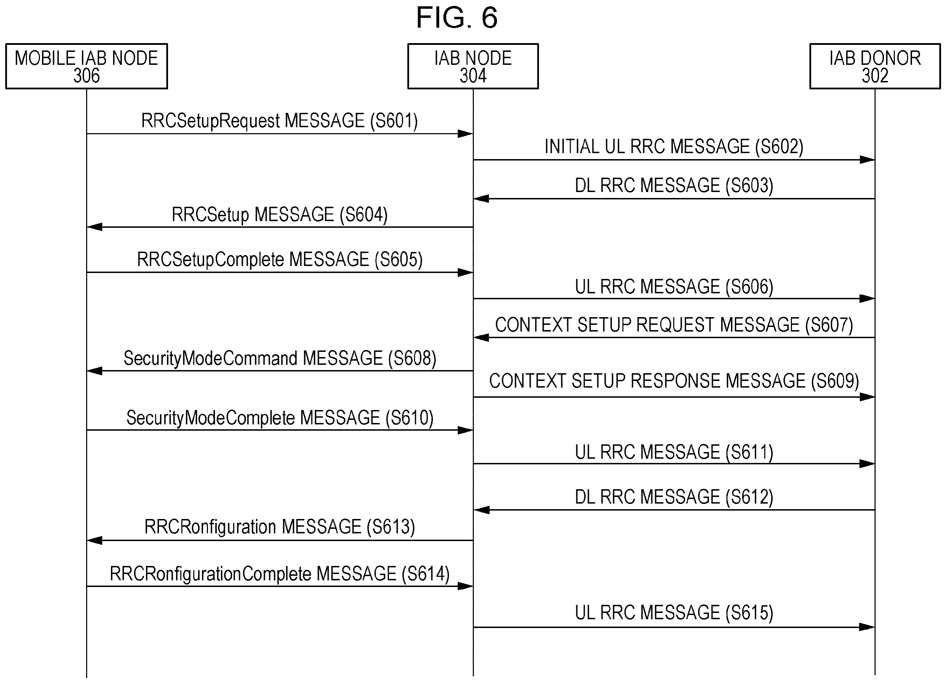

Fig. 4B is a schematic flowchart illustrating an example of RRC message generation processing executed on the mobile IAB node 306 side. The processing illustrated in Fig. 4B may be executed at any timing under a situation where the mobile IAB node 306 is not operating as the boundary IAB node. For example, the processing illustrated in Fig. 4B may be executed at a timing before an RRCSetupComplete message in step S605 in Fig. 6 which will be described below is transmitted or the like.

First, in S450, it is determined whether or not the mobile IAB node 306 is capable of operating as the boundary IAB node. Whether or not the mobile IAB node 306 is capable of operating as the boundary IAB node may be determined based on any determination criterion. For example, the determination criterion may include a state in which a position of the mobile IAB node 306 is within a positional range where the mobile IAB node 306 is capable of operating as the boundary IAB node.

In a case where the mobile IAB node 306 is capable of operating as the boundary IAB node, in step S451, the mobile IAB node 306 includes, in the RRC message, predetermined information representing that its own node is capable of operating as the boundary IAB node. The predetermined information is information representing whether or not its own node is capable of operating as the boundary IAB node. On the other hand, in a case where the mobile IAB node 306 is incapable of operating as the boundary IAB node, in step S452, the mobile IAB node 306 includes, in the RRC message, the predetermined information representing that its own node is incapable of operating as the boundary IAB node. It is noted that in another embodiment, in a case where the mobile IAB node 306 is incapable of operating as the boundary IAB node, in step S452, a configuration may be adopted in which the mobile IAB node 306 does not include the predetermined information itself in the RRC message.

According to the processing illustrated in Fig. 4B, it becomes possible to grasp, on the IAB donor 302 side that receives the RRC message, whether or not the mobile IAB node 306 is capable of operating as the boundary IAB node based on the predetermined information.

Fig. 5 is a schematic flowchart illustrating a flow of processing executed on the IAB donor 302 side in relation to the processing illustrated in Fig. 4B.

It is noted that the present flowchart is described where the IAB node 306 operating as the boundary IAB node is a mobile IAB node intended to move.

First, in F501, at a starting point at which the mobile IAB node 306 participates in a network topology via the IAB node 304, related processing illustrated in Fig. 6 is executed.

Here, Fig. 6 illustrates a sequence example when the mobile IAB node 306 participates in the 5G network. This sequence is a 5G network connection sequence example of the general IAB node based on 3GPP standards defined in 3GPP TR38.401.

First, in S601, the mobile IAB node 306 transmits an RRCSetupRequest message to the IAB node 304.

In S602, the IAB node 304 that has received it transmits an initial UL RRC message to the IAB donor 302 in a case where the mobile IAB node 306 at the transmission source is caused to participate on the 5G network.

When the IAB donor 302 receives this message, the IAB donor 302 transmits a DL RRC message in S603 to the IAB node 304, and the IAB node 304 transmits an RRCSetup message in S604 to the mobile IAB node 306.

In S605, the mobile IAB node 306 that has received this transmits the RRCSetupComplete message to the IAB node 304. Then, to relay the RRCSetupComplete message, in S606, the IAB node 304 transmits the UL RRC message to the IAB donor 302.

To establish a context of the mobile IAB node 306 that has connected to itself, in S607, the IAB donor 302 transmits a context setup request message to the IAB node 304.

The IAB node 304 that has received this transmits a SecurityModeCommand message to the mobile IAB node 306 in S608.

After transmission of this message, the IAB node 304 asynchronously transmits a context setup response message to the IAB donor 302 in S609.

In parallel to this, in S610, the mobile IAB node 306 transmits a SecurityModeComplete message to the IAB node 304. The IAB node 304 relays the SecurityModeComplete message and transmits the UL RRC message to the IAB donor 302 in S611.

In S612, the IAB donor 302 that has received this transmits a RRCRonfiguration message by being included in the DL RRC message to the IAB node 304. The IAB node 304 relays the DL RRC message and transmits the RRCRonfiguration message to the mobile IAB node 306 in S613.

In S614, the mobile IAB node 306 transmits an RRCRonfigurationComplete message serving as a response to the RRCRonfiguration message to the IAB node 304. The IAB node 304 relays this and transmits the UL RRC message to the IAB donor 302 in S615.

Herein, according to the present embodiment, as described above with reference to Fig. 4B, the mobile IAB node 306 transmits the predetermined information by being included in the RRCSetupComplete message illustrated in S605. As described above, the predetermined information is information representing whether or not its own node is capable of operating as the boundary IAB node. According to the present embodiment, the predetermined information is an information field and a parameter on whether or not its own node is capable of operating as the boundary IAB node.

An RRCSetupComplete message format is defined in 3GPP TS38.331. In this case, the predetermined information may be included in an RRCSetupComplete-IEs parameter or an extension parameter group of RRCSetupComplete-IEs.

In addition, the predetermined information may be included in the RRCSetupRequest message or the RRCReconfigurationComplete message instead of or in addition to the RRCSetupComplete message.

Subsequently, in F502, the IAB donor 302 determines whether the predetermined information is included in the RRCSetupComplete message. It is noted that as described above, a configuration may be adopted in which the predetermined information may be included in the RRCSetupRequest message instead of or in addition to the RRCSetupComplete message. In this case, in F502, the IAB donor 302 may determine whether the predetermined information is included in the RRCSetupRequest message.

With regard to F502, more specifically, the IAB donor 302 determines whether or not the information field on whether or not the node is capable of operating as the boundary IAB node is included in the RRCSetupComplete message.

In a case where it is determined in the determination processing in F502 that the information field on whether or not the node is capable of operating as the boundary IAB node is not included, it is determined that the series of processes illustrated in Fig. 4A for causing the node to operate as the boundary IAB node is unnecessary. That is, in a case where the predetermined information indicates that the node is incapable of operating as the boundary IAB node, the processing is not implemented in F504, and the flow returns to a normal operation of the system.

In addition, in a case where it is determined in the determination processing in F502 that the information field on whether or not the node is capable of operating as the boundary IAB node is included, it is determined in F503 whether or not the currently participating mobile IAB node 306 is capable of operating as the boundary IAB node.

More specifically, checking on a parameter included in the information field on whether or not the mobile IAB node 306 is capable of operating as the boundary IAB node is implemented. It is noted that the parameter may be binary such as capable of operating = 1 or incapable of operating = 0. In addition, in another embodiment, the information field may be set only in a case of being capable of operating.

In a case where it is determined in the determination processing in F503 that the currently participating mobile IAB node 306 is incapable of operating as the boundary IAB node, it is determined that the series of processes illustrated in Fig. 4A for causing the mobile IAB node 306 to operate as the boundary IAB node is unnecessary. That is, in a case where the predetermined information indicates that the mobile IAB node 306 is incapable of operating as the boundary IAB node, the processing is not implemented in F504, and the flow returns to the normal operation of the system.

In addition, in a case where it is determined in the determination processing in F503 that the currently participating mobile IAB node 306 is capable of operating as the boundary IAB node, the series of processes illustrated in Fig. 4A for causing the mobile IAB node 306 to operate as the boundary IAB node is necessary. That is, in a case where the predetermined information indicates that the mobile IAB node 306 is capable of operating as the boundary IAB node, in F505, the IAB donor 302 implements the series of processes illustrated in Fig. 4A for causing the mobile IAB node 306 to operate as the boundary IAB node.

In this manner, according to the present embodiment, information on whether or not the IAB node is capable of operating as the boundary IAB node is transmitted to the IAB donor, and the IAB donor 302 that has received it can determine whether or not the processing illustrated in Fig. 4A is implemented. According to this, it is possible to implement the processing illustrated in Fig. 4A for only the IAB node capable of operating as the boundary IAB node. As a result, it is possible to reduce the inconvenience (above-described system load increase) which may occur in a case where all the IAB nodes operate as the boundary IAB nodes.

Next, another embodiment which may be realized instead of the above-described first embodiment will be described. Hereinafter, detailed descriptions on configurations that may be accepted to be similar to the above-described first embodiment are omitted.

### [Second Embodiment]

According to the above-described first embodiment, the predetermined information is transmitted at a timing when the IAB node participates in the network topology. Then, the IAB donor determines whether or not the series of processes illustrated in Fig. 4A for causing the IAB node to operate as the boundary IAB node is implemented. In contrast to this, according to a second embodiment, instead of the timing at which the IAB node participates in the network topology, a timing at which the IAB node transmits peripheral environment information to the IAB donor is used. Specifically, the configuration is as follows.

As specified in 3GPP TS38.331, the IAB node periodically transmits the corrected peripheral environment information by a MeasurementReport message to the IAB donor.

This message is used for the IAB donor to form the network topology. After reception of the MeasurementReport message, the IAB donor transmits the RRCReconfiguration message to the IAB node at the transmission source when necessary for forming the network topology again. According to this, the IAB donor is handed over.

A series of processes for causing a node to operate as the boundary IAB node illustrated in Fig. 4A may also be implemented at such a timing. In this case, transmission is implemented by including the predetermined information in the MeasurementReport message.

According to this, the IAB donor can determine whether or not the series of processes illustrated in Fig. 4A for causing the IAB node to operate as the boundary IAB node is implemented by using the MeasurementReport message.

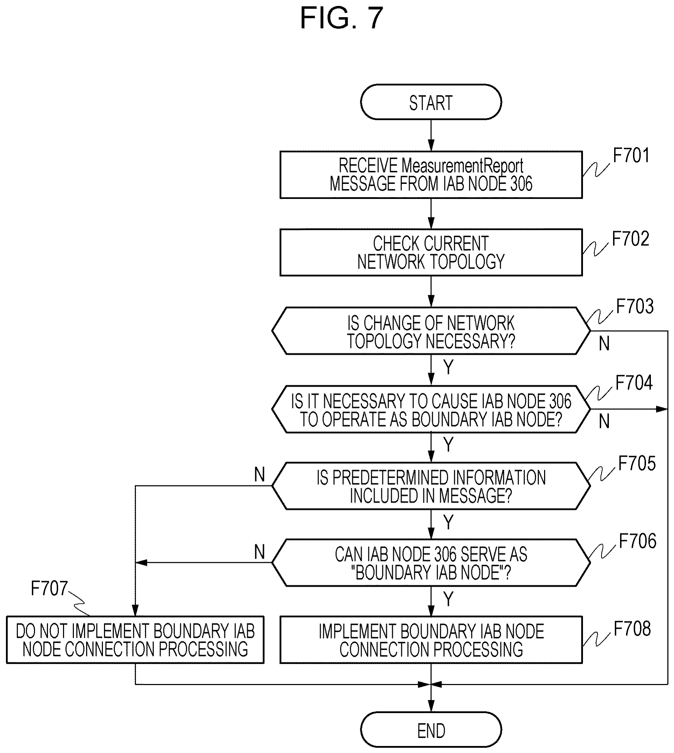

Fig. 7 illustrates a flowchart of the IAB donor 302 according to the present embodiment.

It is noted that according to the first embodiment, the IAB node 306 is the mobile IAB node intended to move, but according to the present embodiment, the IAB node 306 is described as an IAB node which does not involve a movement. It is however noted that the IAB node 306 may of course be a mobile IAB node intended to move.

First, in F701, the IAB donor 302 receives the MeasurementReport message which includes the predetermined information from the IAB node 306 via the IAB node 304. A MeasurementReport message format is defined in 3GPP TS38.331. In this case, the predetermined information can be included in a parameter in a MeasResults field in a MeasurementReport-IEs field.

Next, the IAB donor 302 implements checking on the current network topology in F702, and it is determined in F703 whether or not a network topology change of the IAB node 306 is necessary.

In a case where it is determined in F703 that the network topology change is unnecessary, the flow returns to the normal operation of the system.

Subsequently, in a case where it is determined in F703 that the network topology change is necessary, it is determined in F704 whether or not it is necessary to cause the IAB node 306 to operate as the boundary IAB node.

In a case where it is determined in F704 that it is unnecessary to cause the IAB node 306 to operate as the boundary IAB node, the flow returns to the normal operation of the system. It is however noted that at this time, there may be a case where it is unnecessary to cause the IAB node 306 to operate as the boundary IAB node, but it is determined that handover to another node is necessary. That is, handover processing of the IAB node which is not illustrated in the drawing may be executed.

In a case where it is determined in F704 that it is necessary to cause the IAB node to operate as the boundary IAB node, it is determined in F705 whether the predetermined information is included in the received MeasurementReport message.

More specifically, it is determined whether or not the information field on whether or not the IAB node is capable of operating as the boundary IAB node is included.

In a case where it is determined in the determination processing in F705 that the information field on whether or not the IAB node is capable of operating as the boundary IAB node is not included, it is determined that the series of processes illustrated in Fig. 4A for causing the IAB node to operate as the boundary IAB node is unnecessary. In this case, the processing is not implemented in F707, and the flow returns to the normal operation of the system.

In addition, in a case where it is determined in the determination processing in F705 that the information field on whether or not the IAB node is capable of operating as the boundary IAB node is included, it is determined in F706 whether or not the IAB node is capable of operating as the boundary IAB node.

More specifically, checking on a parameter included in the information field on whether or not the IAB node is capable of operating as the boundary IAB node is implemented.

In a case where it is determined in the determination processing in F706 that the IAB node is incapable of operating as the boundary IAB node, it is determined that the series of processes illustrated in Fig. 4A for causing the IAB node to operate as the boundary IAB node is unnecessary, and the flow returns to the normal operation of the system without implementing the processing in F707.

In addition, in a case where it is determined in the determination processing in F706 that the IAB node is capable of operating as the boundary IAB node, since the series of processes illustrated in Fig. 4A for causing the IAB node to operate as the boundary IAB node is necessary, the processing is implemented in F708.

In accordance with the thus described second embodiment, effects similar to those of the above-described first embodiment are achieved.

### [Third Embodiment]

According to the above-described first and second embodiments, the transmission means for transmitting the predetermined information and the determination timing at which the IAB donor determines whether or not the series of processes illustrated in Fig. 4A for causing the IAB node to operate as the boundary IAB node is implemented have been described.

Herein, the transmission means for transmitting the predetermined information (information on whether or not the IAB node is capable of operating as the boundary IAB node) mainly uses the RRC message. However, the predetermined information may be transmitted by being included in notification information of the IAB node such as a beacon.

The notification information includes SSB, MIB, SIB, and the like, but the predetermined information (information on whether or not the IAB node at the transmission source is capable of operating as the boundary IAB node) may be included in the information transmitted by these. It is noted that SSB is an abbreviation of Synchronization Signal Block. MIB is an abbreviation of MasterInformationBlock. SIB is an abbreviation of SystemInformationBlock.

Particularly, with regard to SIB, as specified in 3GPP TS38.331, various information formats such as peripheral cell information, idle information, and side link related information are defined. A format for defining the predetermined information may be newly established in these definitions and transmitted as a new SIB.

In addition, a process of adding a format indicating the predetermined information in the existing information definition format may be adopted.

Each of the embodiments has been described above in detail but is not limited to a particular embodiment, and various alterations and modifications can be made within a range described in the scope of claims. In addition, all or a plurality of components of the above-described embodiments can be combined.

For example, according to the above-described embodiments, the IAB donor implements the determination on whether or not the series of processes for causing the IAB node to operate as the boundary IAB node as illustrated in Fig. 5 or Fig. 7. At this time, in a case where it is determined in the determination processing in F502 or F705 that the predetermined information (information field on whether or not the IAB node is capable of operating as the boundary IAB node) is not included, the flow returns to the normal operation of the system. That is, as illustrated in F504 and F707, the connection processing as the boundary IAB node is not implemented.

In contrast to this, in a case where information (another example of the predetermined information) on whether or not the IAB donor implements the series of processes for causing the IAB node to operate as the boundary IAB node is included in the information transmitted from the IAB node, the connection processing as the boundary IAB node may be implemented as a system operation.

In this case, in a case where it is determined in the determination processing in F502 or F705 that the information field on whether or not the IAB node is capable of operating as the boundary IAB node is not included, the series of processes for causing the IAB node to operate as the boundary IAB node may be performed in F505 or F708.

In addition, the mobile IAB node according to the first embodiment and the IAB node which does not involve a movement according to the second embodiment have been exemplified as the determination processing flowchart on whether or not the IAB donor implements the series of processes for causing the IAB node to operate as the boundary IAB node. However, determination order rearrangement or additional determination processing may be performed in these determination processes illustrated in Fig. 4A and Fig. 7. For example, the processing of determining whether it is necessary to cause the IAB node at the transmission source illustrated in F704 to operate as the boundary IAB node may be implemented as preprocessing in F502.

In addition, the method of transmitting the predetermined information by being included in the notification information of the IAB node such as the beacon as the transmission means other than the RRC message in the third embodiment. However, a BAP (Backhaul Adaptation Protocol) message may be transmitted as another method. BAP message specifications are defined in 3GPP TS38.340. In this case, the predetermined information (the information field and the parameter on whether or not the IAB node at the transmission source is capable of operating as the boundary IAB node) may be transmitted by being included in a data PDU (Protocol Data Unit) and a control PDU.

The present invention is not limited to the above-described embodiments, and various alterations and modifications can be made without departing from the spirit and the scope of the present invention. Therefore, to make the scope of the present invention public, the following claims are appended.

This application claims the benefit of Japanese Patent Application No. 2023-096499 filed June 12, 2023, which is hereby incorporated by reference herein in its entirety.

## Claims

1. A communication apparatus **characterized by** comprising:
determination means for determining whether or not its own node functioning as an integrated access and backhaul, IAB, node which forms one IAB network is capable of operating as a boundary IAB node which serves as an IAB node connecting to both the one IAB network and another IAB network; and
transmission means for transmitting, based on a determination result of the determination means, a communication message according to the determination result.

2. The communication apparatus according to claim 1, **characterized in that** the communication message includes predetermined information representing whether or not its own node is capable of operating as the boundary IAB node.

3. The communication apparatus according to claim 2, **characterized in that** the predetermined information includes a value of a parameter representing the determination result.

4. The communication apparatus according to any one of claims 1 to 3, **characterized in that** its own node is capable of moving as a mobile IAB node.

5. A communication apparatus that functions as an integrated access and backhaul, IAB, donor which forms one IAB network and that is **characterized by** comprising:
reception means for receiving a communication message from another communication apparatus which functions as an IAB node; and
determination means for determining, based on the communication message, whether or not the other communication apparatus is capable of operating as a boundary IAB node which serves as an IAB node connecting to both the one IAB network and another IAB network.

6. The communication apparatus according to claim 5, **characterized in that** the determination means determines, based on whether or not the communication message includes predetermined information, whether or not the other communication apparatus is capable of operating as the boundary IAB node.

7. The communication apparatus according to claim 6, **characterized in that**, in a case where the communication message includes the predetermined information, the determination means determines, based on the predetermined information, whether or not the other communication apparatus is capable of operating as the boundary IAB node.

8. The communication apparatus according to claim 6 or 7, **characterized in that** the predetermined information includes a value of a parameter representing whether or not the other communication apparatus is capable of operating as the boundary IAB node.

9. The communication apparatus according to any one of claims 1 to 8, **characterized in that** the communication message is a radio resource control, RRC, message, a backhaul adaptation protocol, BAP, message, or a MeasurementReport message.

10. The communication apparatus according to any one of claims 1 to 8, **characterized in that**
the communication message is an RRC message, and
the RRC message is an RRC SetupComplete message or a MeasurementReport message.

11. A control method of controlling communication **characterized by** comprising:
a determination step of determining whether or not its own node functioning as an integrated access and backhaul, IAB, node which forms one IAB network is capable of operating as a boundary IAB node which serves as an IAB node connecting to both the one IAB network and another IAB network; and
a transmission step of transmitting, based on a determination result of the determination step, a communication message according to the determination result.

12. A program **characterized by** causing a computer to execute:
a determination step of determining whether or not its own node functioning as an integrated access and backhaul, IAB, node which forms one IAB network is capable of operating as a boundary IAB node which serves as an IAB node connecting to both the one IAB network and another IAB network; and
a transmission step of transmitting, based on a determination result of the determination step, a communication message according to the determination result.
